# FASCICULE DE BREVET EUROPEEN

(11) **EP 1 034 592 B1**
(45) Date de publication et mention de la délivrance du brevet: **26.02.2003**
(21) Numéro de dépôt: 98956972.8
(22) Date de dépôt: 27.11.1998
(51) Int. Cl.: H02H 9/02

(54) **RESEAU ELECTRIQUE DE PUISSANCE COMPRENANT UN DISPOSITIF DE PRECHARGE ET UNE CHARGE CAPACITIVE**
STROMVERSORGUNGSNETZ MIT EINER VORRICHTUNG ZUM VORLADEN UND EINER KAPAZITIVEN LAST
ELECTRIC POWER SYSTEM COMPRISING A PRE-LOADING DEVICE AND A CAPACITIV LOAD

(30) Priorité: 01.12.1997 FR 9715103
(43) Date de publication de la demande: 13.09.2000
(73) Titulaire: Renault s.a.s., 92100 Boulogne Billancourt (FR)
(72) Inventeur: PEREIRA DA COSTA, José, F-94100 Saint Maur des Fossés (FR); RICHER, Didier, F-75014 Paris (FR)
(86) Numéro de dépôt international: FR9802553
(87) Numéro de publication internationale: WO99029007

(56) Documents cités:
- EP-A- 0 412 631
- EP-A- 0 477 367
- WO-A-97/10635
- US-A- 5 627 738

## Description

La présente invention concerne le domaine de l'architecture électrique du réseau de puissance d'un véhicule à propulsion électrique et, notamment d'un dispositif et d'un procédé de précharge pour une charge capacitive.

Un réseau électrique de puissance embarqué à bord d'un véhicule comprend généralement une batterie d'accumulateurs munie d'un fusible de protection, un ensemble constituant la charge et incluant notamment les moteurs électriques de propulsion, un contacteur principal permettant d'établir la liaison électrique entre la batterie d'accumulateurs et l'ensemble constituant la charge, et un système de contrôle tel qu'un calculateur de supervision.

Généralement, le besoin d'effectuer une précharge d'un réseau de puissance existe lorsque des ensembles capacitifs importants sont connectés à ses bornes. Ce cas est vérifié dans un véhicule électrique puisque les différents organes de puissance, onduleurs, chargeurs, etc.., possèdent des capacités d'entrée totalisant quelques milliers de µFarads. Par conséquent, à la fermeture du contacteur principal, les résistances et selfs de ligne, introduisent des courant d'appel importants sur le réseau, ces courants d'appel pouvant endommager les capacités des organes électroniques, les contacts du contacteur ou encore le fusible de la batterie d'accumulateurs.

Le principe de la précharge repose sur la mise en circuit sur les lignes du réseau de puissance d'un dispositif électronique passif, en parallèle du contacteur principal, dans le but de ralentir l'apparition de la tension de la batterie d'accumulateurs sur les différents éléments constituant la charge.

Si l'on dispose un contacteur de précharge en série avec une simple résistance, on peut précharger le réseau suivant une constante de temps proportionnelle à la valeur de la résistance et à la charge capacitive dudit réseau. Mais en cas de présence sur le réseau d'un organe consommateur au moment de la précharge, on risque de détruire le relais de précharge et la résistance associée. De plus, ce système n'est pas protégé en cas de court-circuit ou de défaut d'isolement.

Le document US-A-5627738 décrit un réseau électrique de puissance tel que définit dans le préambule de la revendication 1.

Le document EP-A-0477367 décrit un système pour éviter des courants d'appel trop importants en prévoyant un dispositif de précharge, constitué d'un relais de précharge en série avec une résistance, en parallèle d'un contacteur principal. Un système de supervision est prévu pour actionner le relais de précharge et le contacteur principal en fonction de la tension à la charge capacitive.

La présente invention a pour but de proposer un dispositif et un procédé de précharge remédiant aux inconvénients des systèmes antérieurs et permettant d'effectuer une précharge en toute sécurité quelque soit l'aléa pouvant intervenir, court-circuit, défaut d'isolement ou présence d'un consommateur important lors de la précharge.

L'invention a également pour objet de protéger les organes électriques du véhicule, notamment en augmentant la durée de vie des contacts du relais de précharge ainsi que du contacteur principal, et de prévenir une accélération éventuelle du vieillissement du fusible de protection de la batterie d'accumulateurs.

Le dispositif de précharge, selon l'invention, est prévu pour un réseau électrique de puissance d'un véhicule à propulsion électrique. Le réseau électrique comprend une batterie d'accumulateurs, un contacteur principale un système de supervision, et des organes de puissance constituant une charge capacitive du réseau. La charge capacitive du réseau est capable d'être alimentée par la batterie d'accumulateurs par l'intermédiaire de deux lignes d'alimentation, le contacteur principal étant prévu pour couper lesdites lignes. Le dispositif de précharge comprend un relais de précharge disposé sur deux lignes de précharge en parallèle du contacteur principal, le relais de précharge étant prévu pour couper les deux lignes de précharge. Le dispositif de précharge comprend une thermistance disposée sur l'une des lignes de précharge de façon que l'énergie consécutive à un court-circuit ou un défaut d'isolement soit dissipé dans la thermistance. Le dispositif de précharge comprend aussi un circuit de mesure de la tension entre les deux lignes d'alimentation, relié au système de supervision On bénéficie ainsi d'un dispositif de construction simple, et de coût faible, autoprotégé contre les court-circuits et les défauts d'isolement. On prévoit une résistance disposée en série avec la thermistance.

Avantageusement, le dispositif de précharge comprend une résistance supplémentaire disposé sur l'autre ligne de précharge, de façon que le courant soit limité en cas de double défaut d'isolement.

Dans un mode de réalisation de l'invention, le dispositif de précharge comprend une paire de condensateurs disposés entre les lignes de précharge de part et d'autre du relais de précharge pour protéger les contacts du relais de précharge contre les variations de tension et accroître ainsi leur durée de vie.

La thermistance peut être à coefficient de température positif (CTP).

Dans un mode de réalisation de l'invention, le dispositif de précharge comprend un circuit de mesure de la tension entre les deux lignes d'alimentation, ce circuit étant relié au système de supervision.

Avantageusement, le système de supervision comprend un moyen de détection du mode de fonctionnement, charge ou décharge, du réseau, un moyen de mesure de la tension entre les deux lignes d'alimentation et un moyen de surveillance et de commande capable, lorsque la variation de la tension mesurée pendant une durée donnée est inférieure à une valeur seuil correspondant à une précharge ne s'effectuant pas convenablement, d'interrompre la précharge, et, si la précharge s'est effectuée convenablement pendant une durée donnée, d'actionner le contacteur principal et d'interrompre la précharge.

La présente invention a également pour objet un procédé de commande d'un réseau électrique de puissance d'un véhicule à propulsion électrique, comprenant des étapes de :
- détection du mode de fonctionnement du réseau, charge ou décharge,
- mesure de la tension entre deux lignes d'alimentation du réseau,
- comparaison de la variation de tension pendant une durée donnée à une valeur seuil,
- si ladite variation de tension est inférieure à ladite valeur seuil, interruption d'une opération de précharge du réseau,
- comparaison de la durée de précharge à une durée donnée,
- si la durée de précharge est supérieure à la durée donnée. interruption de la précharge et actionnement d'un contacteur principal d'alimentation.

Le réseau électrique de puissance du véhicule est ainsi parfaitement protégé contre les défaut pouvant survenir lors de la précharge ce qui permet d'accroître la durée de vie des composants du réseau électrique et d'obtenir une fiabilité supérieure.

La présente invention sera mieux comprise et d'autres avantages apparaîtront à l'étude de la description détaillée de quelques modes de réalisation de l'invention pris à titre d'exemples nullement limitatifs et illustrés par les dessins annexés sur lesquels :
la figure 1 est un schéma électrique du réseau de puissance de véhicule pourvu de dispositif de précharge conforme à l'invention ;
la figure 2 est une variante de la figure 1.

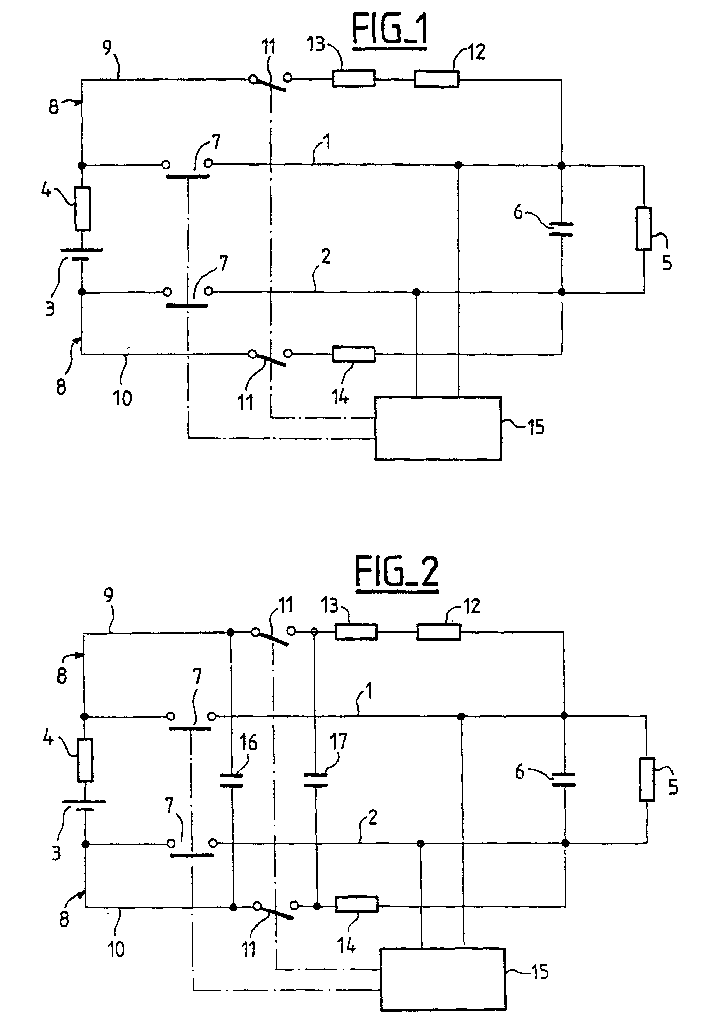

Comme on peut le voir sur la figure 1, le réseau électrique de puissance comprend deux lignes d'alimentation 1 et 2 reliées, d'une part, à une batterie d'accumulateurs 3 protégée par un fusible 4 et, d'autre part, à un ensemble capacitif de charge symbolisé par une résistance 5 et par un condensateur 6, l'ensemble capacitif de charge comprenant les différents organes consommateurs d'énergie électrique disposés dans un véhicule à propulsion électrique. Ces organes consommateurs tel que l'onduleur d'alimentation des moteurs de traction possède des capacités d'entrée élevées. Les lignes d'alimentation 1 et 2 sont pourvues d'un contacteur d'alimentation 7 capable d'isoler ou de mettre en contact électriquement la batterie 3 et les charges 5 et 6. Toutefois, si l'on mettait directement en contact la batterie 3 avec le condensateur 6 déchargé, de forts courants d'appel passeraient dans les lignes 1 et 2 au risque d'endommager le contacteur principal 7 ou le fusible 4.

Un circuit de précharge 8 est prévu pour permettre une montée progressive de la tension aux bornes des charges 5 et 6, la fermeture du contacteur principal 7 n'intervenant qu'après cette montée. Le circuit de précharge 8 comprend une première ligne de précharge 9 disposée en parallèle de la ligne d'alimentation 1 et une deuxième ligne de précharge 10 disposée en parallèle de la ligne d'alimentation 2. Les lignes de précharges 9 et 10 sont pourvues d'un relais de précharge 11 qui peut être à l'état ouvert ou à l'état fermé.

Sur la première ligne de précharge 9, sont disposés une thermistance 12, par exemple du type à coefficient de température positif (CTP) et une résistance 13. Sur la seconde ligne de précharge 10, est disposée une résistance 14. La thermistance 12 permet de limiter le courant d'appel du réseau électrique de puissance pendant la précharge. En effet, si la précharge se passe bien la thermistance 12 ne se déclenche pas et se comporte comme une résistance classique de très faible valeur. En cas de court-circuit, de consommateur important ou de défaut d'isolement, la thermistance 12 se comporte de façon analogue à un fusible en étant capable d'encaisser une variation thermique importante, la valeur de sa résistance augmentant avec la température jusqu'à l'infinie.

Le fusible formé par la thermistance 12 est ré-armable en ce sens que sa résistance diminue lorsque la température de ladite thermistance 12 diminue. Comme la seconde ligne de précharge 10 comprend une résistance 14, le circuit de précharge 8 est symétrique, lors d'une précharge normale où la thermistance 12 conserve une valeur de résistance très faible. La résistance 14 permet de limiter le courant passant dans la seconde ligne de précharge 10 en cas de double défaut d'isolement.

A titre de variante simplifiée, on peut concevoir un circuit de précharge 8 dépourvu des résistances 13 et 14, la protection étant assurée par la seule thermistance 12.

Les résistances 13 et 14 sont de faible valeur, par exemple quelques dizaines d'ohms. La thermistance 12 voit sa résistance, à dissipation nulle, augmenter avec la température dans une plage déterminée. La variation de température peut s'obtenir soit par effet Joule lorsqu'un courant traverse ladite thermistance 12, soit par variation de la température ambiante, ou encore par ces deux phénomènes simultanément.

Une autre variante de l'invention s'applique à un réseau équipé d'un contacteur 7 unipolaire sur une seule des deux lignes d'alimentation (par exemple 1). On utilise alors un relais de précharge 11 également unipolaire associé à une résistance 13 et une CTP 12.

Les condensateurs 16 et 17 peuvent permettre de protéger le relais de précharge unipolaire contre les variations de tension.

Le réseau électrique du véhicule comprend un système de supervision 15 relié d'une part aux lignes d'alimentation 1 et 2 pour mesurer la tension entre lesdites lignes d'alimentation 1 et 2, au contacteur principal 7 et au contacteur de précharge 11 pour leur commande. En fonctionnement normal, le système de supervision commande la fermeture du contacteur de précharge 11 ce qui provoque l'augmentation de la tension entre les lignes d'alimentation 1 et 2 selon une courbe exponentielle dont les caractéristiques dépendent du condensateur 6 et des résistances 5, 13, 14 et de la valeur ohmique de la CTP à température ambiante. A la-fin de la précharge, la tension entre les lignes d'alimentation 1 et 2 atteint une valeur finale sensiblement égale à la valeur nominale de la tension fournie par la batterie 3. Le système de supervision 15 commande alors la fermeture du contacteur principal 7 et l'ouverture du relais de précharge 11.

Au contraire, si la précharge n'est pas correcte et que, suite à un échauffement, la thermistance 12 voit sa valeur de résistance augmenter, l'évolution de la tension entre les lignes d'alimentation 1 et 2 dépend de la variation de température subie par la thermistance 12 en raison de la présence d'un consommateur important sur le réseau, d'un court-circuit ou d'un défaut d'isolement.

Le système de supervision 15 procède à des acquisitions régulières, à intervalles prédéterminés, de la tension entre les lignes d'alimentation 1 et 2 et effectue une comparaison entre la dernière valeur de cette tension et la valeur précédemment mesurée. Si la variation de tension dans l'intervalle prédéterminé est supérieure à une valeur seuil, la précharge s'effectue correctement et peut être poursuivie. Au contraire si cette variation de tension est inférieure à ladite valeur seuil, alors la précharge ne s'effectue pas correctement, la thermistance 12 ayant vu la valeur de sa résistance augmenter en raison d'un échauffement et ayant ralenti l'augmentation de la tension. Le système de supervision 15 peut alors stopper la précharge en ouvrant le relais de précharge 11.

Si la précharge s'effectue correctement, dès que la tension mesurée entre les lignes d'alimentation 1 et 2 dépasse une valeur prédéterminée, proche de la tension nominale de la batterie 3, le système de supervision 15 considère que la précharge est suffisante et commande la fermeture du contacteur principal 7 afin d'établir la tension de la batterie 3 sur le réseau de puissance.

Le système de supervision 15 commande ensuite l'ouverture du relais de précharge 11.

Comme on peut le voir sur la figure 2, le circuit de précharge 8 comprend en plus, deux condensateurs 16 et 17, disposés entre les lignes de précharge 9 et 10 et part et d'autre du relais de précharge 11. Le condensateur 16 est relié aux bornes du relais de précharge 11 du côté de la batterie 3. Le condensateur 17 est relié aux bornes du relais de précharge 11 du côté des résistances 13 et 14 et de la charge 5 et 6. Ces condensateurs 16 et 17 permettent de protéger le relais de précharge 11 contre les variations de tension pouvant survenir lors d'une ouverture dudit relais de précharge 11 en charge c'est-à-dire lorsqu'un courant le traverse. On augmente ainsi la capacité d'ouverture en charge du relais de précharge 11, l'énergie liée à la variation brutale du courant dans les inductances de ligne étant reprise par les condensateurs 16 et 17.

Grâce à l'invention, un réseau électrique de véhicule à propulsion électrique est efficacement protégé contre les effets néfastes d'une mise en contact directe de la batterie avec la charge ou d'une précharge insuffisamment contrôlée, notamment en cas de présence d'un consommateur important sur le réseau, en cas de court-circuit ou en cas de défaut d'isolement.

## Revendications

1. Réseau électrique de puissance d'un véhicule à propulsion électrique comprenant un dispositif de précharge (11, 12, 13), une source de courant (3), au moins un contacteur principal (7), un système de supervision (15), et des organes de puissance constituant une charge capacitive (5, 6) du réseau, le dispositif de précharge (11, 12, 13) comprend au moins une ligne de précharge (9, 10) en parallèle du contacteur principal (7) qui comprend une thermistance (12) limitant le courant, la charge capacitive (5, 6) du réseau étant capable d'être alimentée par la source de courant (3) par l'intermédiaire de deux lignes d'alimentation (1, 2), un circuit de mesure de la tension entre les deux lignes d'alimentation (1, 2) relié au système de supervision (15), **caractérisé en ce que** la source de courant est constitué par une batterie d'accumulateurs (3), le dispositif de précharge comprend un relais de précharge (11) disposé dans ladite ou lesdites lignes de précharge (9, 10), le relais de précharge étant prévu pour couper ladite ou lesdites lignes de précharge, et le moyen de mesure réalise la mesure de la tension entre les deux lignes d'alimentation, à intervalles réguliers, et le système de supervision est capable de comparer la variation de tension pendant chaque intervalle à une valeur seuil correspondant à une précharge normale, et de commander l'ouverture du relais de précharge si ladite variation de tension est inférieure à ladite valeur seuil.

2. Réseau électrique de puissance selon la revendication 1, **caractérisé par le fait qu'**il comprend une résistance (13) disposée en série avec la thermistance.

3. Réseau électrique de puissance selon la revendication 2, **caractérisé par le fait qu'**il comprend une résistance supplémentaire (14) disposée sur l'autre ligne de précharge, de façon que le courant soit limité en cas de double défaut d'isolement.

4. Réseau électrique de puissance selon l'une quelconque des revendications précédentes, **caractérisé par le fait qu'**il comprend une paire de condensateurs (16, 17) disposés entre les lignes de précharge de part et d'autre du relais de précharge pour protéger les contacts du relais de précharge contre les variations de tension.

5. Réseau électrique de puissance selon l'une quelconque des revendications précédentes, **caractérisé par le fait que** la thermistance est à coefficient de température positif (CTP).

6. Réseau électrique de puissance selon la revendication 1, **caractérisé par le fait que** le système de supervision comprend un moyen de détection du mode de fonctionnement, charge ou décharge, du réseau, et un moyen de surveillance et de commande capable, lorsque la variation de la tension mesurée pendant chaque intervalle est inférieure à une valeur seuil correspondant à une précharge ne s'effectuant pas convenablement, d'interrompre la précharge, et, si la précharge s'est effectuée convenablement pendant chaque intervalle, d'actionner le contacteur principal et d'interrompre la précharge.

7. Procédé de commande d'un réseau électrique de puissance d'un véhicule à propulsion électrique selon la revendication 6, comprenant des étapes de :
- détection du mode de fonctionnement du réseau, charge ou décharge,
- mesure de la tension entre deux lignes d'alimentation du réseau, à intervalles prédéterminés,
- comparaison de la variation de tension pendant chaque intervalle à une valeur seuil,
- si ladite variation de tension est inférieure à ladite valeur seuil, interruption d'une opération de précharge du réseau.

8. Procédé de commande selon la revendication 7 comprenant les étapes de :
- comparaison de la durée de précharge à une durée donnée,
- si la durée de précharge est supérieure à la durée donnée, interruption de la précharge et actionnement d'un contacteur principal d'alimentation.

## Patentansprüche

1. Elektrisches Leistungsnetz eines Fahrzeug mit elektrischem Antrieb, umfassend eine Vorbelastungsvorrichtung (11, 12, 13), eine Stromquelle (3), mindestens einen Hauptschalter (7), ein Überwachungssystem (15) und Leistungsorgane, die eine kapazitive Belastung (5, 6) des Netzes bilden, wobei die Vorbelastungsvorrichtung (11, 12, 13) mindestens eine Vorbelastungsleitung (9, 10) parallel zum Hauptschalter (7) umfasst, die einen Thermistor (12) umfasst, der den Strom begrenzt, die kapazitive Belastung (5, 6) des Netzes in der Lage ist, durch die Stromquelle (3) über zwei Speiseleitungen (1, 2) gespeist zu werden, und ein Kreis zur Messung der Spannung zwischen den beiden Speiseleitungen (1, 2) mit dem Überwachungssystem (15) verbunden ist, **dadurch gekennzeichnet, dass** die Stromquelle durch eine Akkumulatorenbatterie (3) gebildet ist, die Vorbelastungsvorrichtung ein Vorbelastungsrelais (11) umfasst, das in der Vorbelastungsleitung oder in den Vorbelastungsleitungen (9, 10) angeordnet ist, wobei das Vorbelastungsrelais dazu vorgesehen ist, die Vorbelastungsleitung oder die Vorbelastungsleitungen zu unterbrechen, das Mittel zur Messung in regelmäßigen Intervallen die Messung der Spannung zwischen den Speiseleitungen ausführt, und das Überwachungssystem in der Lage ist, die Spannungsänderung während jedes Intervalls mit einem Schwellenwert zu vergleichen, der einer normalen Vorbelastung entspricht, und die Öffnung des Vorbelastungsrelais zu befehlen, wenn die Spannungsänderung unter dem Schwellenwert liegt.

2. Elektrisches Leistungsnetz nach Anspruch 1, **dadurch gekennzeichnet, dass** es einen Widerstand (13) umfasst, der in Serie mit dem Thermistor angeordnet ist.

3. Elektrisches Leistungsnetz nach Anspruch 2, **dadurch gekennzeichnet, dass** es einen zusätzlichen Widerstand (14) umfasst, der in der anderen Vorbelastungsleitung angeordnet ist, so dass der Strom im Fall eines doppelten Isolationsfehlers begrenzt wird.

4. Elektrisches Leistungsnetz nach einem der vorhergehenden Ansprüche, **dadurch gekennzeichnet, dass** es ein Paar Kondensatoren (16, 17) umfasst, die zwischen den Vorbelastungsleitungen zu beiden Seiten des Vorbelastungsrelais angeordnet sind, um die Kontakte des Vorbelastungsrelais gegen Spannungsänderungen zu schützen.

5. Elektrisches Leistungsnetz nach einem der vorhergehenden Ansprüche, **dadurch gekennzeichnet, dass** der Thermistor ein solcher mit positivem Temperaturkoeffizienten (PTC) ist.

6. Elektrisches Leistungsnetz nach Anspruch 1, **dadurch gekennzeichnet, dass** das Überwachungssystem ein Mittel zur Erkennung des Betriebsmodus, Belastung oder Entlastung, des Netzes, und ein Mittel zur Überwachung und Steuerung umfasst, das in der Lage ist, die Vorbelastung zu unterbrechen, wenn die während jedes Intervalls gemessene Spannungsänderung unter einem Schwellenwert liegt, der einer nicht ordnungsgemäß durchgeführten Vorbelastung entspricht, und den Hauptschalter zu betätigen und die Vorbelastung zu unterbrechen, wenn die Vorbelastung während jedes Intervalls ordnungsgemäß durchgeführt wurde.

7. Verfahren zur Steuerung eines elektrischen Leistungsnetzes nach Anspruch 6, umfassend folgende Schritte:
- Erkennung des Betriebsmodus des Netzes, Belastung oder Entlastung,
- Messung der Spannung zwischen zwei Speiseleitungen des Netzes in vorbestimmten Intervallen,
- Vergleich der Spannungsänderung während jedes Intervalls mit einem Schwellenwert,
- wenn die Spannungsänderung unter dem Schwellenwert liegt, Unterbrechung eines Vorgangs der Vorbelastung des Netzes.

8. Verfahren zur Steuerung eines elektrischen Leistungsnetzes nach Anspruch 7, umfassend folgende Schritte:
- Vergleich der Vorbelastungsdauer mit einer gegebenen Zeitdauer,
- wenn die Vorbelastungsdauer über der gegebenen Zeitdauer liegt, Unterbrechung der Vorbelastung und Betätigung eines Hauptschalters zur Speisung.

## Claims

1. An electrical power system of an electrically propelled vehicle comprising a precharging device (11, 12, 13), a current source (3), at least one main switch (7), a management system (15) and power members constituting a capacitive load (5, 6) of the power system, the precharging device (11, 12, 13) comprising at least one precharging line (9, 10) in parallel with the main switch (7) which comprises a thermistor for limiting the current, the capacitive load (5, 6) of the power system being capable of being fed by the current source (3) by way of two feed lines (1, 2), and a circuit for measuring the voltage across the two feed lines (1, 2) which is connected to the management system (15), **characterised in that** the current source is formed by an array of accumulators (3), the precharging device comprises a precharging relay (11) disposed in said precharging line or lines (9, 10), the precharging relay being provided to cut said precharging line or lines, and the measuring means effects measurement of the voltage across the two feed lines at regular intervals and the management system is capable of comparing the voltage variation during each interval to a threshold voltage corresponding to normal precharging and implementing opening of the precharging relay if said voltage variation is lower than said threshold value.

2. An electrical power system according to claim 1 **characterised in that** it comprises a resistor (13) in series with the thermistor.

3. An electrical power system according to claim 2 **characterised in that** it comprises an additional resistor (14) on the other precharging line in such a way that the current is limited in the case of a double insulation fault.

4. An electrical power system according to any one of the preceding claims **characterised in that** it comprises a pair of capacitors (16, 17) disposed between the precharging lines on respective sides of the precharging relay to protect the contacts of the precharging relay from voltage variations.

5. An electrical power system according to any one of the preceding claims **characterised in that** the thermistor has a positive temperature coefficient (PTC).

6. An electrical power system according to claim 1 **characterised in that** the management system comprises a means for detecting the mode of operation, charge or discharge, of the power system, and a monitoring and control means capable of interrupting precharging when the variation in the voltage measured during each interval is lower than a threshold value corresponding to a precharging which is not being suitably effected and actuating the main switch and interrupting the precharging if the precharging is being effected suitably during each interval.

7. A process for controlling an electrical power system according to claim 6 comprising steps of:
- detecting the mode of operation of the power system, charge or discharge,
- measuring the voltage across two feed lines of the power system at predetermined intervals,
- comparing the voltage variation during each interval to a threshold value, and
- if said voltage variation is lower than said threshold value interrupting a precharging operation of the power system.

8. A process for controlling an electrical power system according to claim 7 comprising the steps of:
- comparing the precharging duration to a given duration, and
- if the precharging duration is greater than the given duration interrupting the precharging and actuating a main power supply switch.
